Europäisches Patentamt

European Patent Office

Office européen des brevets

(19)

(11) Numéro de publication: **0 038 264**
**B1**

(12) # FASCICULE DE BREVET EUROPEEN

(45) Date de publication du fascicule du brevet:
02.01.85

(21) Numéro de dépôt: 81400584.9

(22) Date de dépôt: 13.04.81

(51) Int. Cl.³: **H 02 P 3/12**

(54) Dispositif de contrôle du freinage électrique pour moteur à courant continu.

(30) Priorité: 16.04.80 FR 8008497

(43) Date de publication de la demande:
21.10.81 Bulletin 81/42

(45) Mention de la délivrance du brevet:
02.01.85 Bulletin 85/1

(84) Etats contractants désignés:
BE CH DE GB IT LI SE

(56) Documents cités:
EP - A - 0 013 383
DE - A - 2 050 822
DE - A - 2 140 906
FR - A - 2 040 913
FR - A - 2 052 515

Karl Sachs "Elektrische Triebfahrzeuge" vol. II,
Springer-Verlag Wien New York p. 110 à 112

(73) Titulaire: **CEM COMPAGNIE ELECTRO-MECANIQUE &
Cie Société en Nom Collectif, 37, rue du Rocher,
F-75383 Paris Cedex 08 (FR)**

(72) Inventeur: **N'Guyen Uyen, Thuy, 34, Rue du Bret
Cedex 222 Villefontaine, F-38290 La Verpilliere (FR)**

(74) Mandataire: **Laget, Jean-Loup et al, Cabinet Pierre
Loyer 18, Rue de Mogador, F-75009 Paris (FR)**

## Description

L'invention concerne un dispositif de contrôle du freinage électrique pour moteur à courant continu, en particulier pour moteur de traction.

Le problème du freinage électrique des moteurs de traction munis d'une commande par hacheur a été résolu jusqu'à présent de deux façons lorsque l'on désire maintenir l'effort de freinage aux vitesses inférieures à celle de définition du moteur de traction.

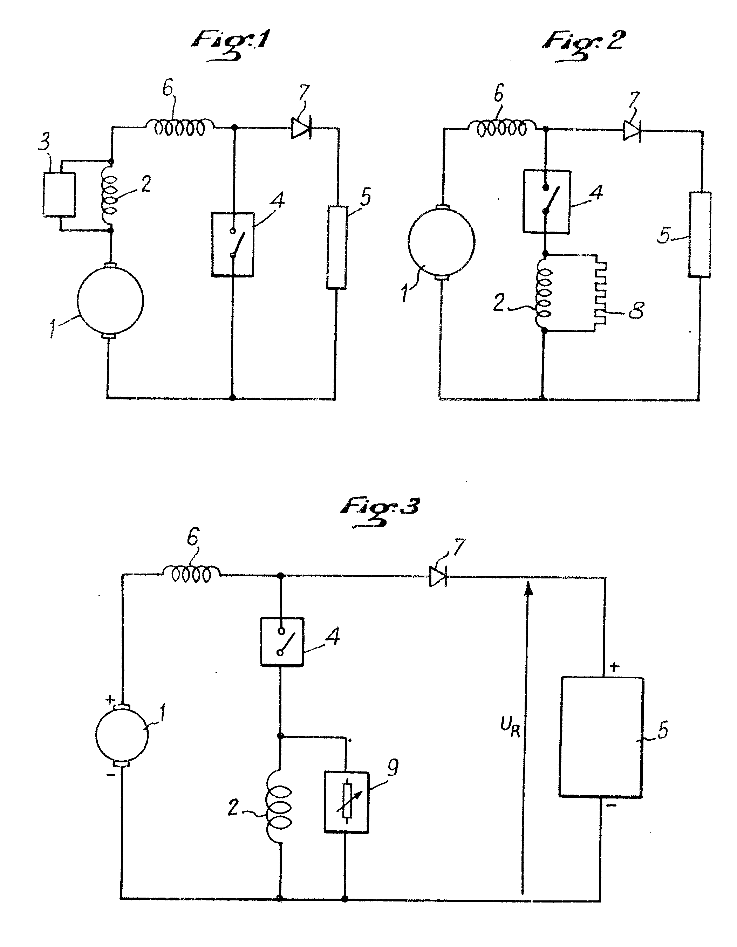

On connaît d'une part (figure 1) un dispositif de freinage électrique d'un moteur à courant continu dans lequel l'inducteur et l'induit du moteur sont en série, l'inducteur pouvant comprendre un shuntage variable, et dans lequel un hacheur est monté en parallèle entre la charge et le moteur de façon à permettre, lors de l'ouverture du hacheur, le débit sur la charge, même lorsque, dans le cas particulier où la charge est une source d'énergie, la force électromotrice du moteur fonctionnant en génératrice est inférieure à celle de la source. Ce montage a¹ les inconvénients liés à l'instabilité de la génératrice série, où l'augmentation du courant dans l'inducteur tend à augmenter la tension aux bornes de l'ensemble.

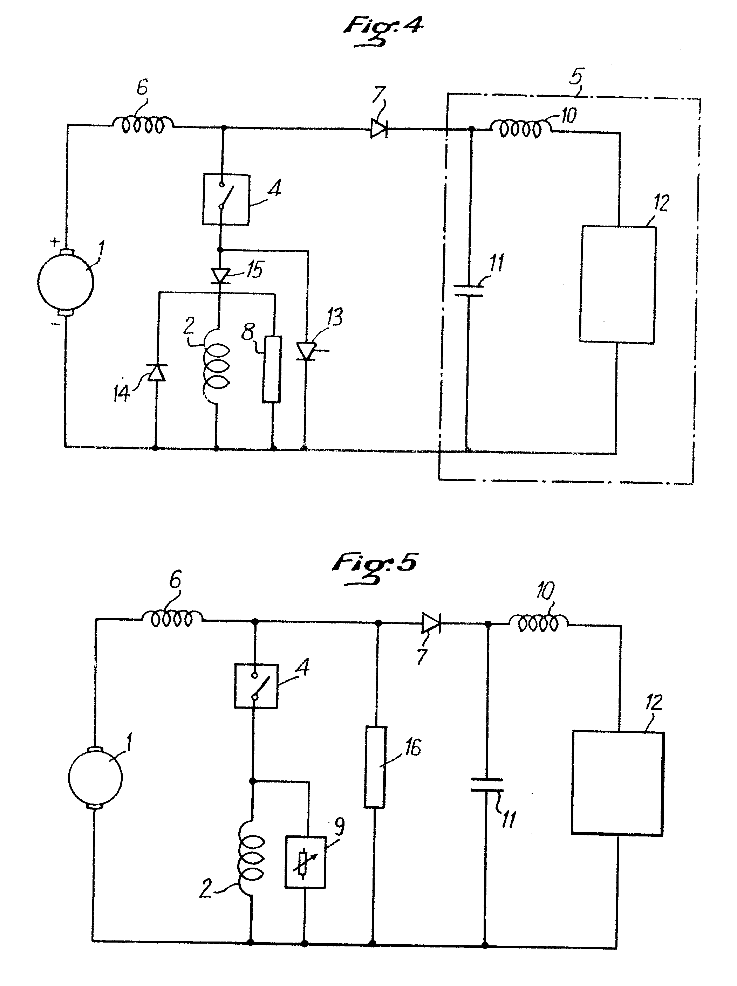

On connaît d'autre part un dispositif de freinage électrique correspondant à la figure 2 dans lequel le moteur de traction fonctionne en génératrice débitant sur le réseau ou sur une charge quelconque. L'excitation de cette génératrice est commandée par un ensemble hacheur-inducteur branché en parallèle aux bornes de l'induit de la génératrice.

Un tel système ne permet de régler le champ d'excitation du moteur que par le hacheur. Pour des cas de fonctionnement où le courant dans l'inducteur doit être faible vis-à-vis du courant de l'induit, ce procédé devient difficile à appliquer car le hacheur doit fonctionner avec un rapport cyclique très faible et des problèmes d'instabilité apparaissent de ce fait.

L'un des buts de l'invention est d'éliminer les inconvénients des dispositifs connus en donnant plus de souplesse au contrôle du freinage électrique de ces moteurs.

Un autre but de l'invention est d'assurer avec des moyens simples le contrôle du freinage électrique des moteurs de traction, aussi bien en cas de freinage rhéostatique qu'en cas de freinage par récupération.

Il est considéré comme compris dans l'état de la technique (Art. 54 (3) CBE), par le document EP-A1-13 383, un dispositif de contrôle du freinage électrique pour un moteur à courant continu de type série, dans lequel l'inducteur est alimenté par un hacheur comme sur la figure 3, un thyristor de shuntage et une diode montée tête-bêche étant placés directement en parallèle sur l'inducteur. Ce dispositif présente cependant certains inconvénients et notamment: une ondulation du courant inducteur, et un risque d'instabilité du fonctionnement.

L'invention a pour objet un dispositif de contrôle du freinage électrique pour moteur à courant continu du type série dans lequel, en parallèle sur la charge, sont montés en série un hacheur et l'inducteur, une diode de roue libre étant prévue en parallèle sur l'inducteur, l'inducteur étant muni d'un dispositif de shuntage contrôlé, caractérisée en ce que ce dispositif de shuntage comporte: en parallèle sur l'inducteur, une résistance; entre le hacheur et l'inducteur, une diode; et en parallèle sur l'ensemble de cette diode et de l'inducteur, un thyristor de shuntage.

Un mode de réalisation de l'invention ressort de la description qui suit faite avec référence au dessin annexé sur lequel on peut voir:

Figure 1 un schéma d'un dispositif de freinage électrique d'un premier type connu;

figure 2 un schéma d'un dispositif de freinage d'un deuxième type connu;

figure 3 un schéma symbolique d'un dispositif de contrôle du freinage électrique d'un moteur à courant continu d'un troisième type compris dans l'état de la technique;

figure 4 un schéma symbolique d'un mode de réalisation d'un dispositif de contrôle de freinage électrique selon l'invention appliqué au cas d'un freinage par récupération;

figure 5 un schéma symbolique selon lequel un dispositif de contrôle de freinage électrique selon l'invention peut être appliqué aux cas du freinage rhéostatique et du freinage par récupération.

Sur la figure 1, on a désigné par 1 l'induit du moteur fonctionnant en génératrice, par 2 l'inducteur, par 3 son système de shuntage variable, par 4 un régleur de courant continu appelé communément hacheur et par 5, un récepteur pouvant être soit une charge quelconque, soit le réseau d'alimentation. Une self 6 est destinée à emmagasiner l'énergie lors de la conduction du hacheur. Une diode de blocage 7 est nécessaire si le récepteur est une source électrique.

Sur la figure 2, les références 1, 2 et 4 à 7 désignent les mêmes éléments que sur la figure 1, et la référence 8 représente une résistance fixe destinée à éliminer la composante alternative due au fonctionnement du hacheur 4 et placée aux bornes de l'inducteur 2. Le hacheur est en série avec ledit inducteur, et le tout en parallèle avec le récepteur 5 et avec l'induit 1.

Sur la figure 3 l'induit 1 d'une génératrice à courant continu débite dans le récepteur 5 via la self 6 et la diode de blocage 7, lorsque le hacheur 4 est ouvert. En parallèle avec l'induit 1 muni de la self 6 sont disposés en série le hacheur 4 et l'inducteur 2 de la génératrice. Un bloc de shuntage 9 est disposé en parallèle avec l'inducteur 2 pour doser le courant d'excitation dans celui-ci.

Le fonctionnement du dispositif est le suivant:

Lorsque le hacheur 4 est ouvert, l'induit 1 de la génératrice débite dans le récepteur 5 grâce à la conduction de la diode 7. La force électromotrice E de la génératrice étant maintenue inférieure à la tension $U_R$ du récepteur 5, c'est l'énergie magnétique emmagasinée dans la self 6 dans la phase qui précède (phase de conduction du hacheur) qui est libérée pour faire circuler ce courant débité.

Dans la phase suivante, le hacheur 4 est rendu conducteur, la diode 7 se bloque et la génératrice alimente son propre circuit inducteur 2. La self 6 se charge en énergie magnétique, tandis que le courant la traversant augmente. Si I désigne le courant moyen dans l'inducteur 2 et J le courant induit fourni par l'induit 1, pour régler le courant inducteur à la valeur I désirée ($I \leq J$), on dérive le surplus de courant ($J-I$) dans le bloc de shuntage 9.

Le mode de fonctionnement décrit fait ressortir les points essentiels suivants:

—  la force électromotrice développée par l'induit 1 de la génératrice est inférieure à la tension $U_R$ du récepteur 5;
—  le hacheur 4 travaille donc en élévateur de tension;
—  le surplus de courant ($J-I$) passe dans le bloc de shuntage 9.

L'avantage apporté par une telle disposition est qu'il existe deux paramètres de commande pour assurer les performances dynamiques de freinage électrique:

—  l'angle d'ouverture $\alpha$ du hacheur 4 pour contrôler le courant induit J débité par la génératrice 1,
—  la commande du bloc de shuntage 9 pour contrôler le courant inducteur I (ou courant d'excitation).

Sur la figure 4, le récepteur 5 est constitué par un filtre (self 10 et condensateur 11) branché sur le réseau 12 de tension U, et le dispositif de shuntage statique comprend:

—  une résistance 8 de shuntage permanent pour dériver les ondulations du courant et le surplus de courant ($J-I$) pendant les périodes où le hacheur 4 est fermé, c'est-à-dire allumé, et où le thyristor 13 est encore bloqué;
—  un thyristor de shuntage 13 fonctionnant avec un rapport cyclique $s < \alpha$, dont le rôle est de moduler la valeur de la résistance 8 de sorte que la résistance apparente de shuntage d'inducteur ait une valeur variable dépendant du paramètre s;
—  une diode de roue libre 14 pour écouler l'énergie magnétique emmagasinée dans les selfs parasites de câblage et dans la self de l'inducteur;
—  une diode 15 branchée entre le point de raccordement du thyristor 13 au hacheur et l'inducteur 2, pour faciliter le blocage du thyristor 13 lorsque le hacheur 4 est bloqué.

L'exemple décrit est relatif au cas du freinage électrique par récupération et le récepteur est dans ce cas le réseau 12. Dans cet exemple, les deux paramètres de contrôle sont:

—  le rapport cyclique $\alpha$ du hacheur 4 pour le contrôle du courant induit J débité par la génératrice 1;
—  le rapport cyclique s du thyristor 13 pour le contrôle du courant inducteur I.

Par ailleurs, le récepteur 5 peut être constitué par une résistance et dans ce cas le freinage électrique est du type rhéostatique. La diode 7 peut alors être supprimée.

Il n'est pas non plus exclu que le récepteur 5 puisse être la combinaison des deux types précédents, on a alors le cas de freinage électrique combiné: rhéostatique et/ou par récupération comme le montre la figure 5, dans laquelle est prévue une résistance 16 pour le freinage rhéostatique.

Avec le procédé selon l'invention, le contrôle du freinage est exercé à la fois et indépendamment, par action sur le courant dans l'induit (rapport cyclique du hacheur) et par action sur le courant dans l'inducteur (rapport cyclique du bloc de shuntage).

## Revendication

Dispositif de contrôle du freinage électrique pour moteur à courant continu du type série dans lequel, en parallèle sur la charge (5), sont montés en série un hacheur (4), et l'inducteur (2), une diode de roue libre (14) étant prévue en parallèle sur l'inducteur (2), l'inducteur étant muni d'un dispositif de shuntage contrôlé, caractérisé en ce que ce dispositif de shuntage comporte: en parallèle sur l'inducteur (2), une résistance (8); entre le hacheur (4) et l'inducteur (2), une diode (15); et en parallèle sur l'ensemble de cette diode (15) et de l'inducteur (2), un thyristor (13) de shuntage.

## Patentanspruch

Steuereinrichtung zur elektrischen Bremsung eines Reihenschluß-Gleichstrommotors, bei der parallel zur Last (5) eine Reihenschaltung aus einem Unterbrecher (4) und der Feldwicklung (2), der eine Freilaufdiode (14) parallel geschaltet ist, liegt und die Feldwicklung mit einer gesteuerten Überbrückungsvorrichtung versehen ist, dadurch gekennzeichnet, daß die Überbrückungsvorrichtung enthält: Parallel zur Feldwicklung (2) einen Widerstand (8), zwischen dem Unterbrecher (4) und der Feldwicklung eine Diode (15), und parallel zu der Anordnung aus dieser Diode (15) und der Feldwicklung (2) einen Überbrükkungs-Thyristor (13).

**Claim**

Device for controlling the electric braking of a series-type direct-current motor, in which device are assembled in series, in parallel with the load (5), a chopper (4) and the inductance (2), a recovery diode (14) provided in parallel with the inductance (2), the inductance being provided with a controlled-shunting device, characterised in that the shunting device comprises a resistance (8) in parallel with the inductance (2); a diode (15) between the chopper (4) and the inductance (2); and a shunting thyristor (13) in parallel with both the said diode (15) and the inductance (2).

Fig.1

Fig.2

Fig.3

*Fig:4*

*Fig:5*

7